(19) Europäisches Patentamt
European Patent Office
Office européen des brevets

(11) **EP 1 293 406 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.⁷: **B60T 8/00**

(21) Anmeldenummer: **02016829.0**

(22) Anmeldetag: **29.07.2002**

(54) **Bremsdruckregelungsverfahren**

Braking pressure control method

Procédé de régulation de la pression de freinage

(84) Benannte Vertragsstaaten:
**DE IT NL SE**

(30) Priorität: **13.09.2001 DE 10145118**

(43) Veröffentlichungstag der Anmeldung:
**19.03.2003 Patentblatt 2003/12**

(73) Patentinhaber: **KNORR-BREMSE SYSTEME FÜR NUTZFAHRZEUGE GMBH**
**80809 München (DE)**

(72) Erfinder:
• **Sönfeld, Jozsef**
**1037 Budapest (HU)**
• **Frank, Péter**
**1118 Budapest (HU)**
• **Skrabak, Attila**
**1224 Budapest (HU)**

(56) Entgegenhaltungen:
**EP-A- 0 526 882     EP-A- 0 630 788**
**EP-A- 0 716 967     DE-A- 19 954 807**
**US-A- 4 712 839     US-A- 5 599 072**

**Beschreibung**

Die vorliegende Erfindung betrifft ein Verfahren zur Regelung des Bremsdrucks eines Fahrzeuges gemäß dem Oberbegriff des Patentanspruches 1.

Ein derartiges Verfahren ist aus der US-A-5 599 072 bekannt. Dort wird bei einem Bremsbeginn die vorhandene Fahrzeugverzögerung erfaßt und zu einem Fahrzeugverzögerungs-Anforderungssignal addiert, wobei die so gewonnene Summe als Sollwert einer Verzögerungsregelung vorgegeben wird. Ändert sich während einer solchen Bremsung die Verzögerung, was durch eine Änderung des Fahrwiderstandes bzw. der Hangneigung erfolgt, so wird das Bremsanforderungssignal im Sinne einer Vergrößerung oder einer Verkleinerung modifiziert, um bei einer Hangabfahrt eine konstante Fahrzeuggeschwindigkeit zu erhalten.

Aus der DE 44 43 522 A1 ist es bekannt, durch Auswertung von Raddrehzahlsignalen eines Fahrzeugs die Neigung, d.h. die Steigung bzw. das Gefälle der Fahrbahn zu ermitteln.

In Abhängigkeit von der Fahrbahnneigung wird ein Drucksockelwert ermittelt, der bei einer Bremsbetätigung durch den Fahrer zu dem sich aus der Stellung des Bremspedals ergebenden Drucksollwert addiert wird. Der Drucksockelwert ist bei einer Steigung negativ und bei einem Gefälle positiv. Die Addition des Drucksockelwerts zu dem vom Fahrer vorgegebenen Bremsdrucksollwert erfolgt stets dann, wenn eine Gefällestrecke befahren wird. Wenn der Drucksockelwert auch bei einer Steigung zum Drucksollwert hinzuaddiert wird, erreicht das Fahrzeug unabhängig vom Fahrbahnverlauf stets die gleiche Verzögerung bezogen auf die Bremspedalauslenkung. Der Fahrer kann also über das Bremspedal eine Verzögerung vorgeben.

Aus der DE 38 29 951 C2 ist ein Verfahren zur lastabhängigen Bremsdruckregelung bekannt. Bei diesem Verfahren wird nicht nur die Bremskraftaufteilung auf die Vorderachse und die Hinterachse geregelt, sondern auch das Gesamtbremsdruckniveau. Das Gesamtbremsdruckniveau wird über einen Bezugsfaktor durch Auswertung der von den Raddrehzahlgebern gelieferten Raddrehzahlsignale in einem Bereich unterhalb des Bereiches geregelt, in dem das ABS eingreift. Vor Fahrtbeginn ist ein Startwert für den Bezugsfaktor vorgegeben. Der Startwert ist einem für eine bestimmte Bremsverzögerung pro "Einheitsauslenkung" des Bremspedals benötigten Bremsdruckniveau zugeordnet. Wenn im Betrieb, z.B. aufgrund sich ändernder Fahrwiderstände, insbesondere einer sich ändernden Fahrbahnneigung, bei einer bestimmten Auslenkung des Bremspedals die zugeordnete Bremsverzögerung nicht errreicht wird, so wird automatisch der Bezugsfaktor entsprechend inkrementiert bzw. dekrementiert.

Ferner sind verschiedene andere Verfahren zur Steuerung des Bremsdruckniveaus in Abhängigkeit vom Beladungszustand eines Fahrzeuges bekannt. Die meisten dieser Verfahren verwenden Lastsensoren.

Diese Sensoren sind entweder in Lastsensierungsventile integriert oder liefern ihre Signale an eine zentrale Steuereinheit, die einen Bremsdruck proportional zu den Lastsignalen errechnet. Derartige Lastsignale sind aber nicht bei jedem Fahrzeug verfügbar, insbesondere nicht bei Fahrzeugen mit einer Stahlfederung, sondern üblicherweise nur bei Lastfahrzeugen mit einer Luftfederung. Bei Fahrzeugen mit einer Stahlfederung ist daher die Installierung eines zusätzlichen Sensors erforderlich.

Bei der eingangs genannten DE 44 43 522 A1 und der DE 38 29 951 C2 werden keine Lastsignale verwendet. Diese Verfahren haben aber den Nachteil, daß der Fahrer beim Bremsen ein im Vergleich zu herkömmlichen Bremssystemen ungewohntes "Fahrgefühl" hat. Die zugrunde liegenden Regelalgorithmen gleichen nämlich die Regelabweichung zwischen der tatsächlichen Radverzögerung und der vom Fahrer über das Bremspedal vogegebenen Bremsanforderung aus.

Eine solche "Ausregelung" ist wünschenswert, wenn sie durch den Beladungszustand des Fahrzeuges verursacht ist. Eine Ausregelung ist aber nicht erwünscht, wenn die Abweichung auf "äußeren Fahrwiderstandskräften", wie z.B. auf einer sich ändernden Fahrbahnsteigung, beruht. Vereinfacht ausgedrückt kompensieren die o.g. Verfahren den Straßenneigungsgradient durch Einsteuern einer zusätzlichen Bremskraft. Die Regelung führt also bei einer Bergabbremsung zu einer stärkeren Bremskraft als bei einer Bergaufbremsung bei gleicher Bremspedalstellung. Dies ist für den Fahrer ungewohnt und kann zu Fehlreaktionen des Fahrers führen.

Diese Regelungsverfahren wurden entwickelt, weil die Verzögerungsunterschiede, die durch eine sich bei einem langen Bremsvorgang ändernde Fahrbahnsteigung verursacht werden, in der geschilderten Weise leicht zu "handhaben" sind.

Für die Bestimmung der Fahrbahnsteigung gibt es zahlreiche bekannte Verfahren. Beispiele für solche Verfahren liefern die eingangs genannte DE 44 43 522 A1 und die US 5,549,364 bzw. die DE 44 12 430 C1, auf die im folgenden jeweils in vollem Umfang Bezug genommen wird.

Diese Verfahren sind seit langem Stand der Technik und haben gemeinsam, daß sie den Hangneigungsgradient, d.h. die Steigung bzw. das Gefälle der Fahrbahn nur dann bestimmen können, wenn das Fahrzeug ungebremst ist, beispielsweise bei Schaltvorgängen. Diese Regelalgorithmen berücksichtigen dabei nicht, aufgrund welcher Einflußfaktoren sich während eines Bremsvorganges eine Abweichung zwischen der gemessenen und der vom Fahrer verlangten Verzögerung einstellt. Vielmehr wird bei diesen Verfahren jegliche Abweichung durch eine "Anpassung" bzw. Modifizierung des Betriebsbremsdrucks ausgeglichen.

Aufgabe der Erfindung ist es, ein alternatives Regelungsverfahren anzugeben, das dem Fahrer beim Bremsen ein "natürlicheres" Fahrgefühl vermittelt, ähnlich wie bei einem herkömmlichen Bremssystem.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, eine Fahrwiderstandsänderung, insbesondere eine Änderung der Fahrbahnsteigung zumindest während eines Teilabschnitts eines Bremsvorganges nur dann durch eine Modifizierung des Bremsdrucks zu kompensieren, wenn sich der Fahrwiderstand bzw. die Fahrbahnsteigung ändert.

Im Gegensatz zum Stand der Technik wird also gerade nicht jede Änderung des Fahrwiderstandes bzw. der Fahrbahnsteigung kompensiert.

Durch die Regelungsstrategie gemäß der Erfindung verbessert sich das "Bremspedalgefühl" des Fahrers, wodurch sich die Fahrsicherheit erhöht. Gleichwohl ist auch dieses Regelungsverfahren zuverlässig und robust, was noch detaillierter erläutert wird.

Erfindungsgemäß wird das vom Fahrer über das Bremspedal vorgegebene Bremsanforderungssignal während des Bremsvorganges bzw. zumindest während eines Teilabschnitts des Bremsvorganges nur dann modifiziert, wenn sich der Fahrwiderstand beim Bremsen verringert.

Vereinfacht ausgedrückt bedeutet das, wenn beispielsweise während des Bremsvorganges das Fahrbahngefälle zunimmt, was einer Verringerung des Fahrwiderstandes entspricht, wird das Bremsanforderungssignal modifiziert, d.h. der Bremsdruck wird erhöht, um eine "Unterbremsung" des Fahrzeuges zu vermeiden.

Demgegenüber wird bei einem Bremsvorgang, bei dem die Fahrbahnsteigung zunimmt, was einer Zunahme des Fahrwiderstandes entspricht, das Bremsanforderungssignal nicht modifiziert. Wie bei einem herkömmlichen Bremssystem wird bewußt in Kauf genommen, daß das Fahrzeug bei zunehmender Steigung in Bezug auf eine über das Bremspedal vorgegebene "Verzögerungsanforderung" überbremst wird. Dies veranlaßt den Fahrer dann, von sich aus die Bremskraft zurückzunehmen.

Das Verfahren ist regelungstechnisch robust, da eine Verzögerungsabnahme, d.h. eine Beschleunigungszunahme bei einer Bergabfahrt mit zunehmendem Gefälle durch einen Regeleingriff ausgeglichen wird. Auf ebener Fahrbahn sowie bei Straßen mit konstant bleibender Steigung bzw. konstant bleibendem Gefälle und bei Straßen mit abnehmender Steigung hat der Fahrer im wesentlichen das gleiche Fahrgefühl wie bei einem herkömmlichen Bremssystem. Ein abweichendes Fahrgefühl stellt sich nur im Falle einem größer werdenden "Gradienten" ein, beispielsweise beim Bergabfahren von einer Fahrbahnkuppe während eines Bremsvorganges.

Erfindungsgemäß wird ein Bremsvorgang regelungstechnisch in einen ersten Bremsabschnitt und einen zweiten Bremsabschnitt unterteilt, denen ein unterschiedlicher Regelungalgorithmus zugrunde liegt. Mit anderen Worten wird in der Anfangsphase einer Bremsung anders geregelt als im weiteren Verlauf der Bremsung. Im weiteren Verlauf der Bremsung, d.h. im zweiten Bremsabschnitt wird nämlich zwischen einer Überbremsung und einer Unterbremsung des Fahrzeuges in Bezug auf das vom Fahrer vorgegebene unmodifizierte Bremsanforderungssignal unterschieden. Bei einer Überbremsung, z.B. infolge einer während des Bremsvorganges zunehmenden Fahrbahnsteigung, erfolgt kein Bremseingriff. Ein Regeleingriff, d.h. eine Modifizierung des Bremsanforderungssignals erfolgt jedoch dann, wenn eine Unterbremsung droht, was beispielsweise dann der Fall ist, wenn das Gefälle der Fahrbahn während des Bremsvorganges zunimmt.

Nach einer Weiterbildung der Erfindung wird vor Bremsbeginn, d.h. bei ungebremster Fahrt die momentane "fahrwiderstandsbedingte Verzögerung" des Fahrzeuges ermittelt. Diese Verzögerung ist insbesondere durch die Steigung bzw. das Gefälle der Fahrbahn, durch Windkräfte, Reibungsverluste etc. bedingt. Beispielsweise wird mit dem in der US 5,549,364 bzw. der DE 44 12 430 C1 beschriebenen Verfahren die Hangneigung und ein der Hangneigung zugeordneter Fahrwiderstand bzw. eine "Fahrzeugverzögerung" ermittelt. Bei einer Bergauffahrt ist diese Fahrzeugverzögerung positiv und bei einer Bergabfahrt negativ, d.h. aufgrund des Gefälles wirkt auf das Fahrzeug eine Beschleunigungskraft.

Ferner wird während des Bremsvorganges mittels Raddrehzahlsensoren eine Ist-Verzögerung des Fahrzeugs ermittelt. Aus der Ist-Verzögerung abzüglich einer dem vom Fahrer vorgegebenen Bremssignal zugeordneten Soll-Verzögerung und abzüglich der fahrwiderstandsbedingten Verzögerung wird eine Verzögerungsdifferenz gebildet.

Schließlich wird der Bremsdruck in Abhängigkeit von der Verzögerungsdifferenz geregelt.

Nach einer Weiterbildung der Erfindung wird während des ersten Bremsabschnitts der Bremsdruck so geregelt, daß der Betrag der Verzögerungsdifferenz verringert wird. Je nach Vorzeichen der Verzögerungsdifferenz wird dies während des ersten Bremsabschnitts durch eine Erhöhung bzw. Verringerung des dem Bremsanforderungssignal zugeordneten Bremsdrucks erreicht. Während des ersten Bremsabschnitts kann also bei Vorliegen einer Verzögerungsdifferenz das Bremsanforderungssignal auch dann modifiziert werden, wenn die fahrwiderstandsbedingte Verzögerung konstant ist, was später noch näher erläutert wird.

Demgegenüber wird während des zweiten Bremsabschnitts bei einem Regeleingriff stets nur eine Erhöhung, aber keine Verringerung des dem Bremsanforderungssignal zugeordneten Bremsdrucks vorgenommen. Es werden also stets nur fahrwiderstandsbedingte Beschleunigungen des Fahrzeugs während einer Bremsung kompensiert, nicht aber fahrwiderstandsbedingte Verzögerungen.

Als Kriterium für die Unterteilung des Bremsvorganges in die beiden Bremsabschnitte kann beispielsweise die seit Bremsbeginn verstrichene Zeit bzw. die seit Bremsbeginn zurückgelegte Fahrstrecke herangezogen werden. Das heißt, es wird die Bremszeit bzw. der Bremsweg ermittelt und mit einer vorgegebenen Zeit bzw. einem vorgegebenen Bremsweg verglichen.

Alternativ dazu kann als maßgebendes Kriterium auch die seit der letzten Ermittlung der fahrwiderstandsbedingten Verzögerung verstrichene Zeit bzw. der seit der letzten Ermittlung der fahrwiderstandsbedingten Verzögerung zurückgelegte Weg verwendet werden.

Im folgenden wird die Erfindung anhand eines Ausführungsbeispieles im Zusammenhang mit der Zeichnung näher erläutert. Es zeigen:

Fig. 1 ein der Erfindung zugrunde liegendes Flußdiagramm; und
Fig. 2-4 diverse Diagramme zur Erläuterung des Grundprinzips der Erfindung.

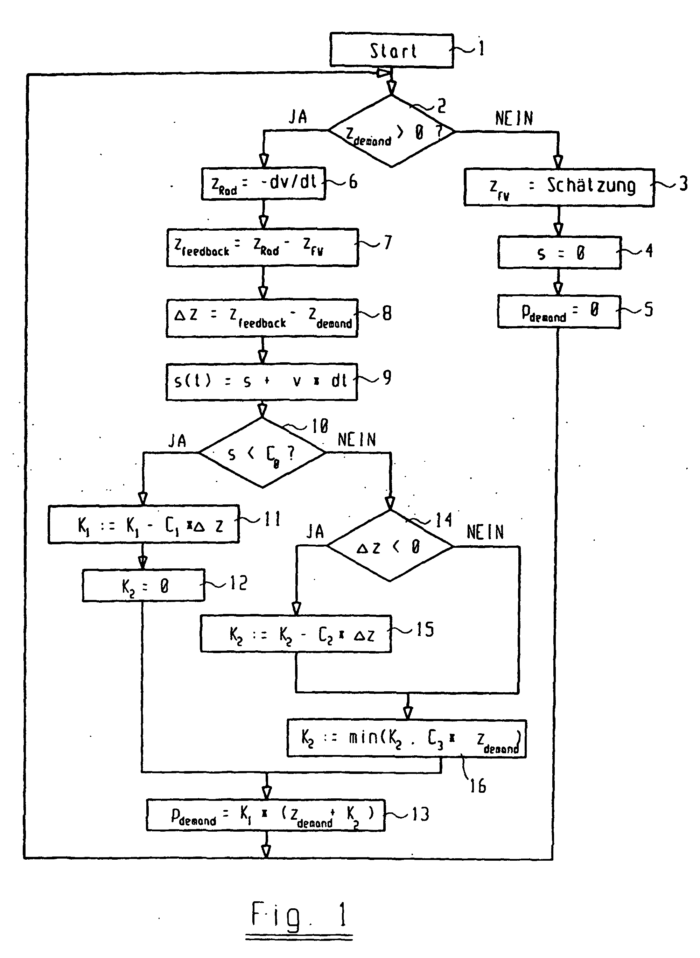

In Fig. 1 wird nach einem Startschritt 1 in Schritt 2 überprüft, ob überhaupt ein Bremsanforderungssignal vorliegt, d.h. ob der Fahrer das Bremspedal betätigt und eine bestimmte "Soll-Verzögerung" $z_{demand}$ vorgibt.

Wenn kein Bremsanforderungssignal vorliegt, d.h. im ungebremsten Fahrzustand, wird in Schritt 3 der Fahrwiderstand bzw. eine dem Fahrwiderstand zugeordnete Verzögerung $z_{FW}$ ermittelt. Beispielsweise wird mit dem aus der US 5,549,364 bzw. der DE 44 12 430 C1 bekannten Verfahren die Steigung bzw. das Gefälle der Straße ermittelt. Die Steigung bzw. das Gefälle werden im folgenden vereinfacht als "Hangneigung" bezeichnet. Entsprechend der Hangneigung wird die Verzögerung bzw. Beschleunigung $z_{FW}$ ermittelt.

Ferner wird nach Ermittlung der fahrwiderstandsbedingten Verzögerung $z_{FW}$ in Schritt 4 eine Wegvariable s auf Null gesetzt. Die Wegvariable s beschreibt die seit der letzten Ermittlung der fahrwiderstandsbedingten Verzögerung zurückgelegte Fahrstrecke, welche mittels Raddrehzahlsensoren gemessen wird.

Da annahmegemäß kein Bremsanforderungssignal vorliegt, ist der "angeforderte" Bremsdruck $p_{demand}$ gleich Null, was durch den Block 5 angedeutet ist. Anschließend wird erneut zu Schritt 2 zurückgesprungen und die Abfrage wiederholt.

Für den Fall, daß ein Bremsanforderungssignal vorliegt, d.h. der Fahrer das Bremspedal betätigt, wird die Fahrzeugverzögerung $z_{Rad}$ ermittelt, und zwar durch Differenzierung eines bzw. mehrerer Raddrehzahlsignale, was durch den Block 6 angedeutet ist.

Aus der Fahrzeugverzögerung $z_{Rad}$ und der vor Bremsbeginn ermittelten fahrwiderstandsbedingten Fahrzeugverzögerung $z_{FW}$ wird durch Subtraktion ein Feedback-Signal $z_{feedback}$ gebildet, was aus Block 7 ersichtlich ist.

In Schritt 8 wird dann aus dem Feedback-Signal $z_{feedback}$ durch Subtrahieren der dem Bremsanforderungssignal zugeordneten Soll-Verzögerung $z_{demand}$ eine Verzögerungsdifferenz Äz errechnet. Die fahrwiderstandsbedingte Verzögerung - $z_{FW}$ geht also über $z_{feedback}$ in die Verzögerungsdifferenz Äz ein, da die Betriebsbremsen des Fahrzeuges den "Hangneigungsanteil" der Fahrzeugverzögerung grundsätzlich nicht ausgleichen sollen, um dem Fahrer ein "natürlicheres" Bremspedalgefühl zu vermitteln.

Die Verzögerungsabweichung Äz kann auch als Fehlersignal bezeichnet werden.

In Schritt 9 wird der seit der letzten Ermittlung bzw. Schätzung der fahrwiderstandsbedingten Verzögerung $z_{FW}$ zurückgelegte Weg s(t) ermittelt, und zwar durch Summierung des Weges s, der seit der letzten Schätzung der fahrwiderstandsbedingten Verzögerung $z_{FW}$ bis zum Bremsbeginn zurückgelegt wurde und dem seit dem Bremsbeginn zurückgelegten Weg, der durch zeitliche Integration der mittels Raddrehzahlsensoren bestimmten Fahrzeuggeschwindigkeit berechnet wird.

In Schritt 10 wird dann eine Fallunterscheidung vorgenommen, wobei überprüft wird, ob der Weg s(t) kleiner oder größer als eine vorgegebene Wegkonstante $C_0$ ist.

Der Fall $s < C_0$ entspricht der Anfangsphase des Bremsvorganges und der Fall $s > C_0$ einer sich an die Anfangsphase anschließenden zweiten Bremsphase.

Wie bereits erläutert, wird der Weg s in Schritt 4 bei ungebremster Fahrt initialisiert.

Alternativ zu der hier beschriebenen "Wegunterscheidung" in Schritt 10 können auch andere Kriterien zur Unterscheidung zwischen einer Anfangsbremsphase und einer fortgeschrittenen Bremsphase verwendet werden. Beispielsweise kann anhand der seit Bremsbeginn verstrichenen Zeit zwischen der Anfangsbremsphase und der fortgeschrittenen Bremsphase unterschieden werden.

Wenn der Weg $s(t) < C_0$ ist, wird die zuletzt in Schritt 3 ermittelte Hangneigung bzw. die zugeordnete Verzögerung $z_{FW}$ als gültig angesehen. Die Verzögerungsdifferenz Äz ist in diesem Fall, d.h. in der Anfangsphase mit großer Sicherheit nicht durch eine Veränderung des Hangneigungsgradienten verursacht. Es ist vielmehr davon auszugehen, daß die Verzögerungsdifferenz Äz durch Unsicherheiten bzw. fehlerhafte fahrzeugabhängige Parameter, wie z.B. Fahrzeugmasse oder Bremsfaktor, verursacht ist.

Die Verzögerungsdifferenz Äz wird in der Anfangsphase des Bremsvorganges durch einen Faktor $K_1$ ausgeglichen. Der Faktor $K_1$ wird in Schritt 11 iterativ in Abhängigkeit von der Verzögerungsdifferenz Äz, die mit einer vorgegebenen Konstante $C_1$ multipliziert wird, ermittelt. Es gilt also:

$$K_1 := K_1 - C_1 \cong \ddot{A}z.$$

Ein weiterer für die Modifizierung des Bremsanforderungssignals erforderlicher Faktor $K_2$ wird in der Anfangsphase des Bremsvorganges initialisiert, wobei $K_2 = 0$ gilt.

In Schritt 13 wird für den momentanen "Rechenzyklus" ein Bremsdruck $p_{demand}$ ermittelt, und zwar gemäß folgender Formel:

$$p_{demand} = K_1 \cong (z_{demand} + K_2).$$

In der Anfangsphase des Bremsvorganges, d. h. solange $s(t) < C_0$ ist, werden die Schritte 11-13 ggf. mehrmals durchlaufen, wobei hier sowohl eine positive bzw. negative Modifizierung des Bremsanforderungssignals, d.h. eine Bremsdruckerhöhung und eine Bremsdruckabsenkung möglich ist.

In der sich daran anschließenden zweiten Phase des Bremsvorganges, d.h. wenn $s(t) > C_0$ ist, wird davon ausgegangen, daß der Hangneigungsgradient nicht mehr gültig ist. Die Verzögerungsdifferenz $\ddot{A}z$ kann also sowohl durch eine sich verändernde Hangneigung oder einen sich verändernden Bremsfaktor entstanden sein. In Abhängigkeit vom Vorzeichen der Verzögerungsdifferenz $\ddot{A}z$, das in Schritt 14 überprüft wird, wird eine von zwei verschiedenen Regelungsschleifen angewendet.

In Schritt 14 wird überprüft, ob die Verzögerungsdifferenz $\ddot{A}z < 0$ ist. Ist $\ddot{A}z > 0$, so liegt in Bezug auf das vom Fahrer vorgegebene unmodifizierte Bremsanforderungssignal eine Überbremsung vor, die gemäß der Erfindung bewußt in Kauf genommen wird. In diesem Fall erfolgt kein Regeleingriff.

Es wird also bewußt auf eine Verringerung der Bremskraft verzichtet, wenn das Fahrzeug beispielsweise auf einer Straße mit zunehmender Steigung fährt. Durch den Verzicht auf einen Regeleingriff wird dem Fahrer im Vergleich zu den eingangs genannten Regelungsverfahren ein "natürlicheres" "Bremsgefühl" vermittelt.

Wenn das Fahrzeug unterbremst wird, d.h. wenn $\ddot{A}z < 0$ ist, ist aus Sicherheitsgründen ein Regeleingriff vorgesehen. Die "Verzögerungslücke" wird durch ein "additives Glied" $K_2$ in Schritt 15 ausgeglichen. Das in Schritt 12 initialisierte Glied $K_2$ wird in Schritt 15 gemäß folgender Formel ermittelt:

$$K_2 := K_2 - C_2 \cong \ddot{A}z,$$

wobei $C_2$ eine vorgegebene Konstante ist.

In einem Schritt 16 wird dann eine Minimalauswahl getroffen und zwar zwischen dem zuvor ermittelten additiven Glied $K_2$ und einem Wert $C_3 \cong z_{demand}$, wobei $C_3$ eine vorgegebene Konstante ist.

$K_2$ wird gleich dem Minimum dieser beiden Werte gesetzt. Das in Schritt 12 initialisierte additive Glied $K_2$ wird also iterativ in Schritt 15 berechnet und ist gemäß Schritt 16 durch das Bremspedalsignal $z_{demand}$ begrenzt, was den Bremskomfort verbessert.

Schließlich wird in Schritt 13 der Bremsdruck $p_{demand}$ berechnet. Der Ausgangswert wird für den Fall, daß kein Bremsanforderungssignal vorliegt, in Schritt 5 auf Null gesetzt.

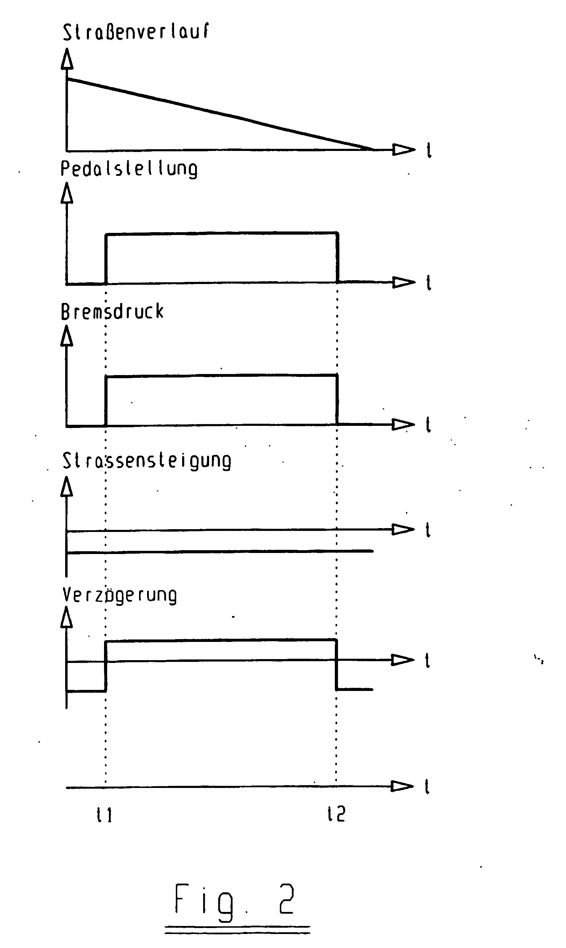

Die Fig. 2-4 zeigen jeweils fünf Diagramme, nämlich:

- Straßenverlauf
- Bremspedalstellung
- Bremsdruck
- Straßensteigung
- Fahrzeugverzögerung.

In Fig. 2 ist eine Bergabfahrt bei konstantem Gefälle dargestellt. Zum Zeitpunkt t1 wird das Bremspedal betätigt und bis zum Zeitpunkt t2 gehalten, wodurch sich ein entsprechend rechteckförmiger Bremsdruckverlauf einstellt. Entsprechend dem Gefälle der Straße ist die Straßensteigung negativ.

Betrachtet man das Verzögerungs-Zeitdiagramm der Fig. 2, so erkennt man, daß bis zum Zeitpunkt t1 die Verzögerung negativ ist, d.h. das Fahrzeug wird auf der abschüssigen Straße beschleunigt. Zwischen den Zeitpunkten t1 und t2 wird das Fahrzeug gebremst, d.h. die Verzögerung springt vom negativen in den positiven Bereich. Im Zeitpunkt t2 ist das Fahrzeug soweit abgebremst, daß die Bremse wieder gelöst wird, und das Fahrzeug beschleunigt erneut.

Das Bremsverhalten gemäß der Erfindung bei einer Bergabfahrt mit konstantem Gefälle entspricht also dem eines herkömmlichen Fahrzeuges.

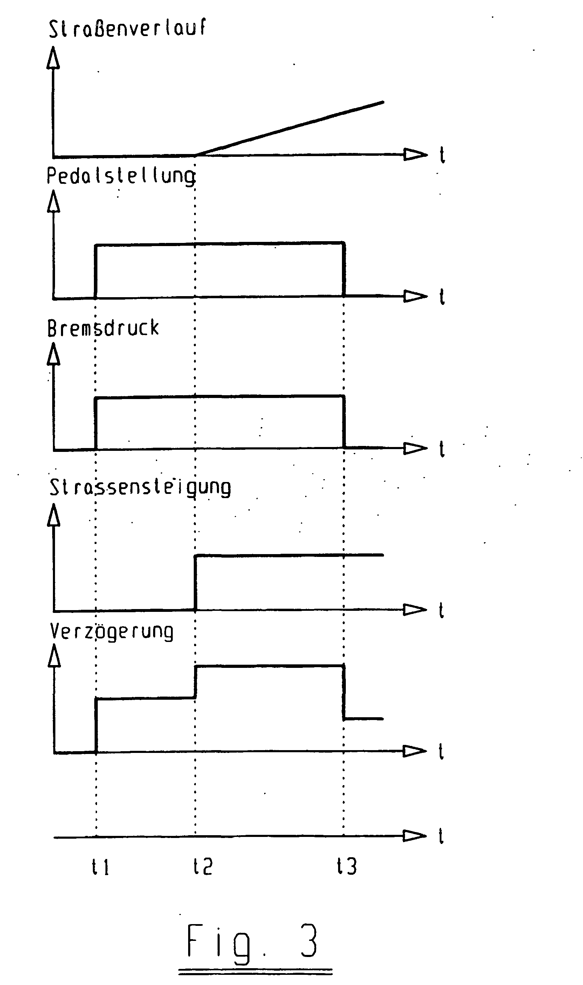

Fig. 3 beschreibt ein Fahrzeug, das zunächst, d.h. bis zum Zeitpunkt t2 auf einer ebenen Fahrbahn fährt. Ab dem Zeitpunkt t2 steigt die Fahrbahn an. Das Diagramm der Bremspedalstellung und des Bremsdruckverlaufs entspricht dem der Fig. 1. Entsprechend dem Straßenverlauf hat das Straßensteigungsdiagramm einen rechteckförmigen Verlauf.

Betrachtet man das Verzögerungs-Zeitdiagramm, so ist ersichtlich, daß das Fahrzeug bis zum Zeitpunkt t1 ungebremst ist. Zum Zeitpunkt t1 betätigt der Fahrer das Bremspedal, wodurch sich eine positive Verzögerung, d.h. eine Abbremsung des Fahrzeuges einstellt. Im Zeitpunkt t2 kommt zu der Verzögerung durch das Betriebsbremssystem eine zusätzliche steigungsbedingte Verzögerungskraft hinzu, wodurch die Verzögerung des Fahrzeuges erneut ansteigt. Im Zeitpunkt t3 ist das Fahrzeug soweit abgebremst, daß der Fahrer vom Bremspedal geht, wodurch die Fahrzeugverzögerung um den "Betriebsbremsanteil" abfällt. Ab dem Zeitpunkt t3 wird das Fahrzeug somit nur noch durch den "Straßensteigungsanteil" gebremst.

Auch bei einem Straßenverlauf gemäß Fig. 3 entspricht das Bremsverhalten des Fahrzeuges dem eines herkömmlichen Fahrzeuges.

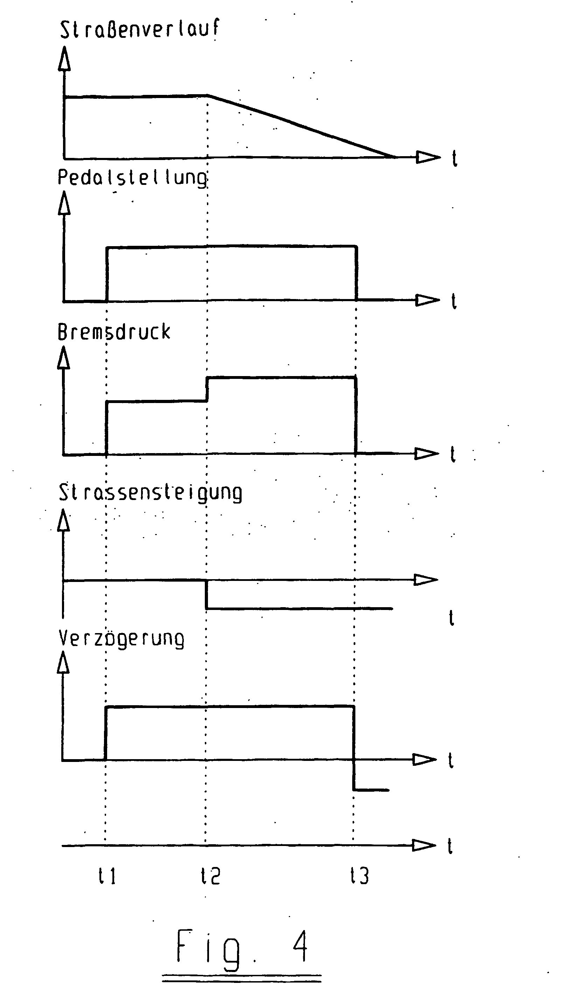

Fig. 4 beschreibt die Fahrzeugbewegung von der Ebene in eine Strecke mit konstantem Gefälle. Analog zu den Figuren 2, 3 betätigt der Fahrer im Zeitpunkt t1 das Bremspedal und löst die Bremse im Zeitpunkt t3. Entsprechend dem Straßenverlauf hat die Straßensteigung ab dem Zeitpunkt t2 einen negativen Wert.

Charakteristisch für die Erfindung ist der Bremsdruckverlauf und der Verzögerungsverlauf, was hier nur qualitativ dargestellt ist, wobei von einer exakten Darstellung bzw. Unterscheidung der beiden Bremsabschnitte (Anfangsbremsphase, zweite Bremsphase) abgesehen wurde.

Betrachtet man zunächst den Verzögerungsverlauf, so ist ersichtlich, daß das Fahrzeug bis zum Zeitpunkt t1 ungebremst ist. Im Zeitpunkt t1 betätigt der Fahrer das Bremspedal, und es stellt sich eine positive Verzögerung ein. Im Zeitpunkt t2 geht das Fahrzeug in die Gefällestrecke über, wodurch sich bei einem herkömmlichen Fahrzeug die Fahrzeugverzögerung bei gleich bleibender Bremspedalstellung verringern würde, d.h. das Fahrzeug würde schneller werden.

Dies ist hier nicht der Fall. Die gefällebedingte "Beschleunigung" wird nämlich durch einen zusätzlichen Bremsdruck ausgeglichen, der im Zeitpunkt t2 automatisch dem vom Fahrer vorgegebenen Betriebsbremsdruck überlagert wird.

Hierdurch wird sichergestellt, daß die Verzögerung auch im Zeitintervall [t2, t3] konstant gehalten wird. Im Zeitpunkt t3 geht der Fahrer vom Bremspedal, so daß sich eine negative Fahrzeugverzögerung einstellt, d.h. das Fahrzeug wird beschleunigt.

Aus Fig. 4 ist also ersichtlich, daß das vom Fahrer vorgegebene Bremsanforderungssignal bzw. der Bremsdruck nur dann modifiziert, d.h. erhöht werden, wenn sich der Fahrwiderstand während der Dauer des Bremsvorganges verringert, z.B. durch den Übergang von einer ebenen Strecke in eine Gefällestrecke oder durch den Übergang von einem konstanten Gefälle zu einem stärkeren Gefälle.

Das Bewegungsverhalten des Fahrzeuges ähnelt somit dem eines Fahrzeuges mit herkömmlichen Bremssystem im Falle einer konstanten Fahrbahnsteigung, einem konstanten Gefälle, einer zunehmenden Steigung bzw. einem abnehmenden Gefälle. Bei einer abnehmenden Hangneigung bzw. bei einem zunehmenden Gefälle hingegen gleicht ein zusätzlicher Regelschritt den Verzögerungsverlust aus Sicherheitsgründen aus.

**Patentansprüche**

1. Verfahren zur Regelung des Bremsdruckes eines Fahrzeuges, wobei ein vom Fahrer vorgegebenes Bremsanforderungssignal ($z_{demand}$, $p_{demand}$) in Abhängigkeit des Fahrwiderstandes ($z_{FW}$) des Fahrzeuges durch eine Regeleinrichtung dann modifiziert wird, wenn sich der Fahrwiderstand ($z_{FW}$) während der Dauer des Bremsvorganges ändert,

   **dadurch gekennzeichnet,**

   **daß** bei einem Bremsvorgang zwischen einem ersten Bremsabschnitt und einem zweiten Bremsabschnitt unterschieden wird, wobei dem ersten Bremsabschnitt ein anderer Regelalgorithmus zugeordnet ist, als dem zweiten Bremsabschnitt, wobei der erste Bremsabschnitt zeitlich vor dem zweiten Bremsabschnitt liegt,

   **daß** bei der Regelung während des zweiten Bremsabschnittes zwischen einer Überbremsung und einer Unterbremsung des Fahrzeugs in Bezug auf das unmodifizierte Bremsanforderungssignal ($z_{demand}$, $p_{demand}$) unterschieden wird, und

   **daß** das Bremsanforderungssignal ($z_{demand}$, $p_{demand}$) nur bei einer Unterbremsung modifiziert wird, wenn sich der Fahrwiderstand während der Dauer des Bremsvorganges verringert, während das Bremsanforderungssignal bei einer Erhöhung des Fahrwiderstandes ($z_{FW}$) unmodifiziert bleibt.

2. Verfahren nach Anspruch 1, **dadurch gekennzeichnet, daß**

   - vor einem Bremsbeginn die momentane fahrwiderstandsbedingte Verzögerung des Fahrzeuges ermittelt wird,
   - während des Bremsvorganges mittels Raddrehzahlsensoren die Ist-Verzögerung ($z_{Rad}$) ermittelt wird,
   - eine Verzögerungsdifferenz (Äz) gebildet wird, aus der Ist-Verzögerung ($z_{Rad}$) abzüglich einer dem Bremsanforderungssignal ($z_{demand}$, $p_{demand}$) zugeordneten Soll-Verzögerung ($z_{demand}$) und abzüglich der fahrwiderstandsbedingten Verzögerung ($z_{FW}$), und
   - der Bremsdruck ($p_{demand}$) in Abhängigkeit von der Verzögerungsdifferenz (Äz) geregelt wird.

3. Verfahren nach einem der Ansprüche 1 oder 2, **dadurch gekennzeichnet,**

   **daß** während des ersten Bremsabschnitts der Bremsdruck ($p_{demand}$) so geregelt wird, daß der Betrag der Verzögerungsdifferenz (Äz) verringert wird.

4. Verfahren nach einem der Ansprüche 1 bis 3, **dadurch gekennzeichnet,**

   **daß** im zweiten Bremsabschnitt der Regelung zwischen einer negativen und einer positiven Verzögerungsdifferenz (Äz) unterschieden wird, entsprechend einer Unterbremsung bzw. einer Überbremsung des Fahrzeuges, wobei nur bei einer negativen Verzögerungsdifferenz (Äz) ein Regeleingriff erfolgt.

**5.** Verfahren nach einem der Ansprüche 1 bis 4, **dadurch gekennzeichnet,**
**daß** zur Unterteilung des Bremsvorganges in die beiden Bremsabschnitte eine ab Bremsbeginn verstrichene Zeitdauer vorgegeben ist, wobei die tatsächlich verstrichene Zeitdauer gemessen und mit der vorgegebenen Zeitdauer verglichen wird.

**6.** Verfahren nach einem der Ansprüche 1 bis 5, **dadurch gekennzeichnet,**
**daß** zur Unterteilung des Bremsvorganges in die beiden Bremsabschnitte eine ab Bremsbeginn zurückgelegte Fahrstrecke ($C_0$) vorgegeben ist, wobei die tatsächlich zurückgelegte Fahrstrecke (s) durch zeitliche Integration einer mittels Raddrehzahlsensoren ermittelten Referenzgeschwindigkeit (v) des Fahrzeuges bestimmt wird und mit der vorgegebenen Fahrstrecke ($C_0$) verglichen wird.

**7.** Verfahren nach einem der Ansprüche 1 bis 6, **dadurch gekennzeichnet,**
**daß** zur Unterteilung des Bremsvorganges in die beiden Bremsabschnitte eine seit der letzten Ermittlung der fahrwiderstandsbedingten Verzögerung ($z_{FW}$) des Fahrzeuges verstrichene Zeitdauer vorgegeben ist.

**8.** Verfahren nach einem der Ansprüche 1 bis 7, **dadurch gekennzeichnet,**
**daß** zur Unterteilung des Bremsvorganges in die beiden Bremsabschnitte eine seit der letzten Ermittlung der fahrwiderstandsbedingten Verzögerung ($z_{FW}$) des Fahrzeuges zurückgelegte Fahrstrecke (s) vorgegeben ist, wobei die tatsächlich zurückgelegte Fahrstrecke durch zeitliche Integration einer mittels Raddrehzahlsensoren ermittelten Referenzgeschwindigkeit (v) des Fahrzeuges bestimmt wird.

**9.** Verfahren nach einem der Ansprüche 1 bis 8, **dadurch gekennzeichnet,**
**daß** bei einer Regelung im ersten Bremsabschnitt der einzusteuernde Bremsdruck ($p_{demand}$) durch Multiplizieren der dem vom Fahrer vorgegebenen Bremsanforderungssignal ($z_{demand}$) zugeordneten Verzögerung ($z_{demand}$) mit einem ersten Faktor ($K_1$) erhalten wird, der in Abhängigkeit von der Verzögerungsdifferenz ($\ddot{A}z$) ermittelt wird.

**10.** Verfahren nach Anspruch 9, **dadurch gekennzeichnet,**
**daß** bei einer Regelung im zweiten Bremsabschnitt der einzusteuernde Bremsdruck ($p_{demand}$) erhalten wird durch Addieren der dem vom Fahrer vorgegebenen Bremsanforderungssignal ($z_{demand}$) zugeordneten Verzögerung ($z_{demand}$) mit einem additiven Glied ($K_2$), das in Abhängigkeit von der Verzögerungsdifferenz ($\ddot{A}z$) ermittelt wird, und durch Multiplizieren der Summe mit dem ersten Faktor ($K_1$),

der in Abhängigkeit von der Verzögerungsdifferenz ($\ddot{A}z$) ermittelt wird.

**11.** Verfahren nach Anspruch 10, **dadurch gekennzeichnet,**
**daß** der Wert des additiven Glieds ($K_2$) in Abhängigkeit von der Verzögerung ($z_{demand}$) ermittelt wird, die dem vom Fahrer vorgegebenen Bremsanforderungssignal ($z_{demand}$) zugeordnet ist.

**12.** Verfahren nach einem der Ansprüche 1 bis 11, **dadurch gekennzeichnet,**
**daß** die Neigung der Fahrbahn ermittelt wird, auf der das Fahrzeug fährt, und daß aus der Neigung der Fahrwiderstand bzw. die fahrwiderstandsbedingte Verzögerung ($z_{FW}$) ermittelt wird.

**Claims**

**1.** Method of controlling the braking pressure of a vehicle, wherein a brake demand signal ($z_{demand}$, $p_{demand}$) predetermined by the driver is modified as a function of the resistance to vehicular motion ($z_{pw}$) by a controller when the resistance to vehicular motion ($z_{pw}$) varies during the period of the braking operation,
**characterised in**
**that** in a braking operation a distinction is made between a first braking section and a second braking section, with a control algorithm being associated with the first braking section, which is different from the algorithm for the second braking section, with said first braking section preceding said second braking section in time,
**that** in the case of control during said second braking section, a distinction is made between excessive braking operation and insufficient braking operation on the vehicle, relative to the unmodified brake demand signal ($z_{demand}$, $p_{de\text{-}mand}$), and
**that** said brake demand signal ($z_{demand}$, $p_{demand}$) is modified only in the case of insufficient braking operation when the resistance to vehicular motion is reduced during the period of the braking operation, whilst in the case of an increase of the resistance to vehicular motion ($z_{pw}$) the brake demand signal remains unmodified.

**2.** Method according to Claim 1, **characterised in**

- **that** prior to a beginning of the braking operation, the instantaneous deceleration of the vehicle is determined, which is due to the resistance to vehicular motion,
- **that** during the braking operation the actual deceleration ($z_{Rad}$) is determined by wheel speed sensors,

- **that** a difference in deceleration ($\dot{A}z$) is formed from the actual deceleration ($z_{Rad}$) less a rated deceleration ($z_{demand}$) associated with the brake demand signal ($z_{demand}$, $p_{demand}$) and less the deceleration ($z_{pw}$) due to the resistance to vehicular motion, and
- **that** the braking pressure ($p_{demand}$) is controlled as a function of the difference in deceleration ($\dot{A}z$)

3. Method according to any of the Claims 1 or 2, **characterised in**
   **that** during the first braking section, the braking pressure ($p_{demand}$) is controlled in such a way that the amount of the difference in deceleration ($\dot{A}z$) will be reduced.

4. Method according to any of the Claims 1 to 3, **characterised in**
   **that** in the second braking section of the control operation, a distinction is made between a negative a nd a positive difference in deceleration ($\dot{A}z$) i n correspondence with an insufficient braking operation or an excessive braking operation on the vehicle, with controlling interference taking place only in the case of a negative difference in deceleration ($\dot{A}z$).

5. Method according to any of the Claims 1 to 4, **characterised in**
   **that** for a subdivision of the braking operation into the two braking sections, a time interval is predetermined that has elapsed from the beginning of the braking operation, with the actually elapsed period being measured and compared against said predetermined time interval.

6. Method according to any of the Claims 1 to 5, **characterised in**
   **that** for subdivision of the braking operation into the two braking sections, a running distance ($C_0$) is predetermined, which has been covered from the beginning of the braking operation, with the actually covered running distance (s) being determined by integration over time of a reference speed (v) of the vehicle, which is detected by means of wheel speed sensors, and being compared against the predetermined running distance ($C_0$).

7. Method according to any of the Claims 1 to 6, **characterised in**
   **that** for subdivision of the braking operation into the two braking sections, a time interval is predetermined which has elapsed since the last determination of the deceleration ($z_{pw}$) of the vehicle, which is caused by the resistance to vehicular motion.

8. Method according to any of the Claims 1 to 7, **characterised in**

**that** for subdivision of the braking operation into the two braking sections, a running distance (s) is predetermined which has been covered since the last determination of the vehicle deceleration ($z_{pw}$) caused by the resistance to vehicular motion, with the running distance actually covered being determined by integration over time of a reference speed (v) of the vehicle, which is detected by means of wheel speed sensors.

9. Method according to any of the Claims 1 to 8, **characterised in**
   **that** with control in the first braking section, the braking pressure ($p_{demand}$) to be controlled is obtained by multiplying the deceleration ($z_{demand}$) associated with the brake demand signal ($z_{demand}$) predetermined by the driver, by a first factor ($K_1$) that is determined as a function of the difference in deceleration ($\dot{A}z$).

10. Method according to Claim 9, **characterised in**
    **that** with control in the second braking section, the braking pressure ($p_{demand}$) to be controlled is obtained by addition of the deceleration ($z_{demand}$) associated with the brake demand signal ($z_{demand}$) predetermined by the driver, by means of an adder element ($K_2$) that is determined as a function of the difference in deceleration ($\dot{A}z$), and by multiplication of the sum by the first factor ($K_1$) that is determined as a function of the difference in deceleration ($\dot{A}z$).

11. Method according to Claim 10, **characterised in**
    **that** the value of the adder element ($K_2$) is determined as a function of the deceleration ($z_{demand}$) that is associated with the brake demand signal ($z_{demand}$) predetermined by the driver.

12. Method according to any of the Claims 1 to 11, **characterised in**
    **that** the inclination of the roadway is determined on which the vehicle is running, and that the resistance to vehicular motion or the deceleration ($z_{pw}$) caused by the resistance to vehicular motion, respectively, is determined from the inclination.

## Revendications

1. Procédé à régler la pression de freinage d'un véhicule, dans lequel un signal de demande de freinage ($z_{demand}$, $p_{demand}$) prédéterminé par le chauffeur est modifié en fonction de la résistance au roulement ($z_{pw}$) par un dispositif des réglage, quand la résistance au roulement ($z_{pw}$) varie au cours de l'intervalle de l'opération des freinage,
   **caractérisé en ce**
   **qu'**en une opération de freinage, on distingue entre un premier sous intervalle de freinage et un deuxième sous intervalle de freinage, à un algorithme de commande étant affecté au premier sous intervalle de freinage, qui est différent de l'algorithme pour le deuxième sous intervalle de freinage, audit premier sous intervalle de freinage étant antérieur audit deuxième sous intervalle de freinage,

**qu'**au cas des commande au cours dudit deuxième sous intervalle de freinage, on distingue entre une opération de freinage excessif et une opération de freinage insuffisant du véhicule, relativement au signal de demande de freinage ($z_{demand}$, $p_{demand}$) non modifié, et

en ce que ledit signal de demande de freinage ($z_{demand}$, $p_{demand}$) est modifié seulement au cas d'une opération de freinage insuffisant, quand la résistance au roulement est réduite au cours de l'intervalle d'opération de freinage, pendant qu'au cas d'une augmentation de la résistance au roulement ($z_{pw}$), le signal de demande de freinage reste non modifié.

2. Procédé selon la revendication 1, **caractérisé en ce**

   - **qu'**avant un début de l'opération de freinage, la décélération instantanée du véhicule est établie, qui est induite par la résistance au roulement,
   - **qu'**au cours de l'opération de freinage, la décélération réelle ($z_{Rad}$) est établie moyennant des capteurs de vitesse de roue,
   - **qu'**une différence en décélération ($\Delta z$) est formée par dérivation de la décélération réelle ($z_{Rad}$) moins une décélération de consigne ($z_{demand}$) affectée au signal de demande de freinage ($z_{demand}$, $p_{demand}$) et moins la décélération ($Z_{pw}$) induite par la résistance au roulement, et
   - en ce que la pression des freinage ($p_{demand}$) est commandée en fonction de la différence en décélération ($\Delta z$)

3. Procédé selon une quelconque des revendications 1 ou 2, **caractérisé en ce qu'**au cours du premier sous intervalle de freinage, la pression de freinage ($p_{demand}$) est commandée d'une telle manière, que le montant de la différence en décélération ($\Delta z$) soit réduit.

4. Procédé selon une quelconque des revendications 1 à 3, **caractérisé en ce qu'**au cours du deuxième sous intervalle de freinage de l'opération de réglage, on distingue entre une différence en décélération ($\Delta z$) négative et positive en correspondance avec une opération de freinage insuffisant ou une opération de freinage excessif du véhicule, à intervention de réglage n'étant faite qu'au cas d'une différence en décélération ($\Delta z$) négative.

5. Procédé selon une quelconque des revendications 1 à 4, **caractérisé en ce que** pour le sectionnement de l'opération de freinage en les deux sous intervalles de freinage, un intervalle des temps est prédéterminé, qui s'écoulait à partir du début de l'opération de freinage, en mesurant la période réellement écoulée et en le comparant dudit intervalle de temps prédéterminé.

6. Procédé selon une quelconque des revendications 1 à 5, **caractérisé en ce que** pour le sectionnement de l'opération de freinage en les deux sous intervalles de freinage, un parcours de roulement ($C_0$) est prédéterminé, qui était parcouru à partir du début de l'opération de freinage, audit parcours de roulement (s) réellement parcouru étant établi par intégration sur le temps d'une vitesse de référence (v) du véhicule, qui est détectée moyennant des capteurs de vitesse de roue, et étant comparé du parcours de roulement ($C_0$) prédéterminé.

7. Procédé selon une quelconque des revendications 1 à 6, **caractérisé en ce que** pour le sectionnement de l'opération de freinage en les deux sous intervalles de freinage, un intervalle de temps est prédéterminé, qui s'écoulait à partir de la dernière détection de la décélération ($z_{pw}$) du véhicule, qui est induite par la résistance au roulement.

8. Procédé selon une quelconque des revendications 1 à 7, **caractérisé en ce que** pour le sectionnement de l'opération de freinage en les deux sous intervalles de freinage, un parcours de roulement (s) est prédéterminé, qui était parcouru à partir de la dernière détection de la décélération du véhicule ($z_{pw}$) induite par la résistance au roulement, au parcours de roulement réellement parcouru étant déterminé par l'intégration sur le temps d'une vitesse de référence (v) du véhicule, qui est détectée moyennant des capteurs de vitesse de roue.

9. Procédé selon une quelconque des revendications 1 à 8, **caractérisé en ce qu'**au cas de réglage au cours du premier sous intervalle de freinage, la pression de freinage ($p_{demand}$) à régler est obtenue par la multiplication de la décélération ($z_{demand}$) affectée au signal de demande de freinage ($z_{demand}$) prédéterminé par le chauffeur, par un premier facteur ($K_1$), qui est déterminé en fonction de la différence en décélération ($\Delta z$).

10. Procédé selon la revendication 9, **caractérisé en ce qu'**au cas de réglage au cours du deuxième sous intervalle de freinage, la pression de freinage ($p_{demand}$) à régler est obtenue par l'addition de la décélération ($z_{demand}$) affectée au signal de demande de freinage ($z_{demand}$) prédéterminé par le chauffeur, moyennant un élément addeur ($K_2$), qui est déterminé en fonction de la différence en décélération ($\Delta z$), et par multiplication de la somme par le premier facteur ($K_1$), qui est établi en fonction de la différence en décélération ($\Delta z$).

**11.** Procédé selon la revendication 10, **caractérisé en ce que** la valeur de l'élément addeur ($K_2$) est établie en fonction de la décélération ($z_{demand}$) affectée au signal de demande de freinage ($z_{demand}$) prédéterminé par le chauffeur.

**12.** Procédé selon une quelconque des revendications 1 à 11, **caractérisé en ce que** l'inclinaison de la chaussée est établie, sur laquelle le véhicule roule, et **en ce que** la résistance au roulement ou respectivement la décélération ($z_{pw}$) induit par la résistance au roulement est établie par dérivation de l'inclinaison.

$$\text{Start} \quad 1$$

$$Z_{demand} > 0 ? \quad 2$$

JA ... NEIN

$$Z_{Rad} = -dv/dt \quad 6$$

$$Z_{fv} : \text{Schätzung} \quad 3$$

$$Z_{feedback} = Z_{Rad} - Z_{fv} \quad 7$$

$$s = 0 \quad 4$$

$$\Delta Z = Z_{feedback} - Z_{demand} \quad 8$$

$$P_{demand} = 0 \quad 5$$

$$s(t) = s + v \times dt \quad 9$$

$$s < C_0 ? \quad 10$$

JA ... NEIN

$$K_1 := K_1 - C_1 \times \Delta Z \quad 11$$

$$\Delta Z < 0 \quad 14$$

JA ... NEIN

$$K_2 = 0 \quad 12$$

$$K_2 := K_2 - C_2 \times \Delta Z \quad 15$$

$$K_2 := \min(K_2, C_3 \times Z_{demand}) \quad 16$$

$$P_{demand} = K_1 \times (Z_{demand} + K_2) \quad 13$$

Fig. 1

Fig. 2

Fig. 3

Straßenverlauf

Pedalstellung

Bremsdruck

Strassensteigung

Verzögerung

t1          t2          t3

# Fig. 4